Europäisches Patentamt

**European Patent Office**

**Office européen des brevets**

(11) Numéro de publication: **0 248 720 B1**

## FASCICULE DE BREVET EUROPEEN

(45) Date de publication de fascicule du brevet: **25.11.92**  (51) Int. Cl.5: **B01D 53/04**, C01B 3/56,
C01B 23/00

(21) Numéro de dépôt: **87401216.4**

(22) Date de dépôt: **01.06.87**

(54) **Procédé et installation de séparation d'un mélange gazeux par adsorption.**

(30) Priorité: **02.06.86 FR 8607872**

(43) Date de publication de la demande:
**09.12.87 Bulletin 87/50**

(45) Mention de la délivrance du brevet:
**25.11.92 Bulletin 92/48**

(84) Etats contractants désignés:
**AT BE CH DE ES FR GB GR IT LI LU NL SE**

(56) Documents cités:
**EP-A- 0 022 603**
**EP-A- 0 108 005**
**US-A- 4 482 361**

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07(FR)**

(72) Inventeur: **Hay, Léon**
**19, rue de la Vistule**
**F-75013 Paris(FR)**
Inventeur: **Crozel, Didier**
**14, rue Edmond Roger**
**F-75015 Paris(FR)**
Inventeur: **Simonet, Guy**
**105, Cours de Vincennes**
**F-75020 Paris(FR)**

(74) Mandataire: **Le Moenner, Gabriel et al**
**L'AIR LIOUIDE 75, Ouai d'Orsay**
**F-75321 Paris Cédex 07(FR)**

## Description

L'invention concerne un procédé de séparation d'un mélange gazeux par adsorption, du genre où l'on effectue sur chacun d' au moins trois adsorbeurs un cycle d'opérations successives suivantes, les cycles étant décalés l'un par rapport à l'autre d'un déphasage égal à la durée d'un cycle divisé par le nombre d'adsorbeurs :

a) une opération de production isobare à la pression haute du cycle, dite à co-courant ;

b) une première décompression à co-courant par au moins un équilibrage entre ledit adsorbeur en décompression et au moins un autre adsorbeur en recompression à contre-courant, chaque équilibrage étant un équilibrage "direct" assurant le transfert du gaz provenant d'un adsorbeur en décompression directement et immédiatement dans un adsorbeur en recompression ;

c) une seconde décompression par vidage partiel à co-courant vers un réservoir de stockage ;

d) immédiatement après l'étape (c), une troisième décompression, qui est finale, à contre-courant jusqu'à la pression basse du cycle ;

e) un balayage à contre-courant à ladite pression basse par du gaz prélevé hors du réservoir de stockage, et cela pendant une durée supérieure à celle de l'étape (c) ;

f) une première recompression à contre-courant par au moins un équilibrage du type selon (b) ;

g) immédiatement suivie par une recompression finale à contre-courant jusqu'à la pression haute du cycle par un débit de gaz prélevé sur le débit de production ;

caractérisé par la combinaison des mesures suivantes :

Un procédé de ce type est décrit dans la demande de brevet européen EP-A-0.108.005 au nom de la présente Demanderesse.

L'invention vise à simplifier encore la technologie mise en oeuvre permettant d'opérer substantiellement de la même façon avec un nombre d'adsorbeurs encore réduit et cet objectif de l'invention est atteint en mettant en oeuvre, en outre, la combinaison des mesures suivantes :

h) la somme des durées du vidage selon c), de la décompression finale selon d), et du balayage selon e) est inférieure audit déphasage ;

i) le nombre total d'adsorbeurs est inférieur ou égal à $1 + x + y$, x étant le nombre d'adsorbeurs simultanément en production isobare et y le nombre d'équilibrages directs ;

l) pendant la phase (c), le réservoir de stockage est exclusivement raccordé à l'adsorbeur en cours de vidage, et pendant la phase (e) ledit réservoir de stockage est exclusivement raccordé à l'adsorbeur en cours de balayage;

m) une opération de vidage-décompression par vidage partiel selon (c), qui intéresse un adsorbeur, est suivie, après la phase (d), d'une opération de balayage selon (e) qui intéresse exclusivement le même adsorbeur.

Cette façon de faire présente, comme on le verra plus loin, l'avantage de simplification annoncée au regard d'autres documents de l'état antérieur de la technique. Par exemple, dans le brevet américain No. 4 482 361, qui ne concerne pas le type de cycle selon la combinaison opératoire a à g, le réservoir-tampon n'est pas utilisé pour l'élution et on ne retrouve pas la caractéristique "h" selon laquelle la somme des durées de vidage selon c) de la décompression finale selon d) et du balayage selon e) est inférieure au déphasage, ni les caractéristiques "l" et "m".

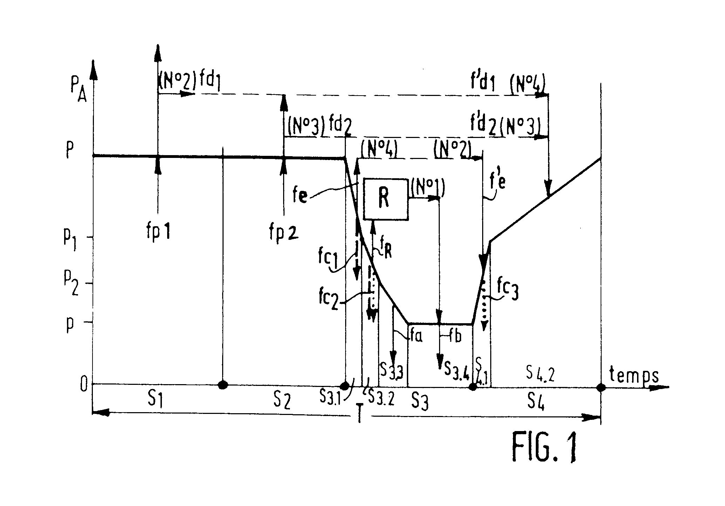

L'E.P.-A-022.603 ne décrit pas la caractéristique "i" et vise, avant tout, à améliorer la qualité de production par une complication de la technologie (il faut par exemple 7 adsorbeurs et 2 réservoirs pour un cycle à deux équilibrages directs selon les figures 1 à 4 du document).

L'invention, au contraire, a pour objet de simplifier sans perte de performances le procédé selon EP-A-0 108 005

D'autes caractéristiques et avantages de l'invention ressortiront de la description qui suit, à titre d'exemple, en référence aux dessins annexés dans lesquels :

- la figure 1 représente un diagramme de pression en fonction du temps pour un adsorbeur et pour le réservoir de stockage respectivement, dans un cycle mettant en oeuvre quatre adsorbeurs ;

- les figures 2 à 4 et 6 à 9 sont des diagrammes analogues à la figure 1 de cinq variantes de mise en oeuvre de l'invention ;

- la figure 5 est un schéma de l'installation complète.

En se référence à la figure 1, une installation comporte quatre adsorbeurs et l'on a représenté, en trait plein et fort, la variation de pression pour l'adsorbeur n° 1, les trois autres étant désignés par les chiffres n° 2 à n° 4.

De façon habituelle, sur les diagrammes, les traits orientés par des flèches indiquent les mouvements et destinations des courants gazeux : lorsque les flèches sont parallèles à l'axe des ordonnées, elles indiquent, en outre, une circulation longitudinale dans un adsorbeur : lorsqu'une flèche est orientée selon le sens des ordonnées croissantes, le courant est dit à co-courant dans l'adsorbeur, c'est-à-dire selon le sens d'écoulement pendant l'opération de production ; si la flèche dirigée vers le haut est située au-dessous du trait indiquant la pression dans l'adsorbeur, cela indique que le courant pénètre dans l'adsorbeur par l'extrémité d'entrée de l'adsorbeur ; si la flèche, dirigée vers le haut, est située au-dessus du trait indiquant la pression, le courant sort de l'adsorbeur par l'extrémité de sortie de l'adsorbeur, les extrémités d'entrée et de sortie étant toujours définies comme respectivement celles de l'entrée du gaz à traiter et de la sortie du gaz soutiré dans l'opération de production isobare; lorsqu'une flèche est dans le sens des ordonnées décroissantes, le courant est dit à contre-courant dans l'adsorbeur, c'est-à-dire en sens inverse d'écoulement pendant l'étape de production. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur. Les flèches orientées dans le sens croissant des abscisses indiquent des écoulements de transfert d'un adsorbeur à un autre, avec notation du numéro d'adsorbeur (entre parenthèses) vers lequel le courant gazeux est dirigé, lorsque la flèche part d'une ligne de courant, correspondant à une sortie de gaz d'un adsorbeur ou d'un réservoir de stockage matérialisé par la lettre R et une notation du numéro d'adsorbeur (entre parenthèses) d'où provient le courant gazeux lorsque la flèche rejoint une ligne de courant gazeux correspondant à une introduction de gaz dans un adsorbeur. Les flèches orientées selon les abscisses sont réunies par des traits interrompus signifiant que le courant gazeux se dirige vers, ou provient d'un autre adsorbeur que l'adsorbeur N° 1.

Dans les procédés décrits ci-dessous, on combine différentes opérations, toutes connues en soi, au cours d'un cycle, de durée toujours désignée par T, et décomposé en un certain nombre de phases égal au nombre d'adsorbeurs en fonctionnement cyclique, chacune de durée égale à $S = T/n$ (n étant le nombre d'adsorbeurs et que l'on désigne par $S_1$, $S_2$,... $S_n$. La durée d'une opération d'un cycle peut, selon les cas, être supérieure, égale ou inférieure à la durée d'une phase. Les opérations peuvent s'effectuer en une ou plusieurs étapes. Si une phase comporte plusieurs étapes, la durée de l'étape est représentée en subdivisant la durée de la phase désignée, à l'aide de numéros d'ordre 1, 2, 3, etc... Par exemple, si une phase $S_x$ comporte trois étapes, les durées de celle-ci seront désignées par $S_{x.1}$, $S_{x.2}$, $S_{x.3}$.

Les courants gazeux correspondant à une étape sont représentés par le symbole f suivi d'une lettre représentant le type d'opération et d'un numéro d'ordre de l'étape en cours dans cette opération.

Les opérations constituant le procédé sont toutes de l'un des six types suivants :

1er type: Production à P constante du gaz produit dite production isobare, la circulation du gaz dans l'adsorbeur à co-courant, désignée par $f_p$ étant réalisée par admission de mélange et soutirage du gaz produit. Si cette production isobare s'étend sur plusieurs phases, elle est subdivisée en plusieurs étapes distinguées par un numéro d'ordre selon l'ordre de succession des phases, par exemple $f_{p1}$, $f_{p2}$, pour les étapes correspondant aux durées des phases $S_1$ et $S_2$.

Lorsque l'opération de production ne comporte qu'une seule étape $f_p$, la production sur l'installation à n adsorbeurs, est assurée de manière continue par un seul adsorbeur, chacun à tour de rôle avec permutation de période S. Lorsque l'opération de production comporte plusieurs étapes $f_{p1}$, $f_{p2}$,... la production est assurée de manière continue simultanément par autant d'adsorbeurs qu'il y a d'étapes de production dans le cycle élémentaire. Par exemple, en se référant à la figure 1, le cycle comporte deux étapes de production ; lorsque l'adsorbeur N°1 est en production en $S_1$ selon $f_{p1}$, simultanément, l'adsorbeur N°4 est en production en $S_2$ selon $f_{p2}$ ; lorsque l'adsorbeur N°1 est en production en $S_2$ selon $f_{p2}$, simultanément l'adsorbeur N°2 est en production en $S_1$ selon $f_{p1}$ ; et ainsi de suite.

2em type: Un ou plusieurs équilibrages entre deux adsorbeurs, et dans ce cas le courant gazeux de l'adsorbeur en cours de décompression sort par l'extrémité de sortie, c'est-à-dire qu'il est toujours à co-courant, tandis que ce courant pénétrant dans l'autre adsorbeur en cours de repressurisation entre par l'extrémité de sortie, c'est-à-dire s'écoule à contre-courant dans cet adsorbeur. On désigne un tel équilibrage par les flèches $f_e$-$f'_e$, en notant $f_e$ le gaz issu de l'adsorbeur en décompression et $f'_e$ le gaz allant vers l'adsorbeur en repressurisation. S'il y a plusieurs équilibrages, on affecte les flèches $f_e$ - $f'_e$ d'un indice 1, 2, ou 3 indiquant s'il s'agit du premier, second ou troisième équilibrage. Ainsi, l'indice $f_{e2}$ - $f'_{e2}$ signifie un second équilibrage avec $f_{e2}$ correspondant au courant gazeux issu de l'adsorbeur en décompression : et $f'_{e2}$ correspondant au courant gazeux allant vers l'adsorbeur en recompression ;

3ème type: Vidage partiel d'un adsorbeur vers un réservoir de stockage R, opération que l'on désigne par $f_R$, s'effectuant toujours à co-courant ;

4ème type: Dépressurisation finale, jusqu'à la pression minimale du cycle, d'un adsorbeur qui s'effectue toujours à contre-courant, c'est-à-dire par l'extrémité d'entrée et que l'on désigne par $f_a$ ;

5ème type: Balayage, ou élution, d'un adsorbeur décomprimé qui s'effectue à partir de gaz prélevé du réservoir de stockage R et qui balaye l'adsorbeur à contre-courant à la pression minimale du cyle, donc de l'extrémité de sortie vers l'extrémité d'entrée et qui est indiquée par $f_b$ ;

$6^{\text{ème}}$ type: Recompression finale à contre-courant par prélèvement d'une partie du gaz produite dans un ou plusieurs adsorbeurs en production et que l'on désigne par $f_d$ - $f'_d$, en notant $f_d$ le gaz issu de l'adsorbeur en production et $f'_d$ le gaz entrand dans l'adsorbeur en recompression. Si les prélèvements sont effectués sur plusieurs étapes de production, on les différencie par un numéro d'ordre associé au numéro d'étape de production, par exemple $f_{d1}$ - $f'_{d1}$, $f_{d2}$ - $f'_{d2}$ pour les étapes de production 1 et 2.

En ce qui concerne les pressions, on désigne par :

. P la pression maximale de cycle ;

. p la pression minimale de cycle ;

. $p_1$, $p_2$, $p_3$, ... les première, le cas échéant seconde, troisième pressions intermédiaires entre P et p ;

. $P_R$ et $p_R$ les pressions maximale et minimale dans le réservoir de stockage R, avec mention, sur certains diagrammes, des numéros d'adsorbeurs alimentant le réservoir R (notés en dessous du trait horizontal partant de R) et des numéros d'adsorbeurs alimentés par le réservoir de stockage R (notés au dessus de ce trait). Ainsi, à la figure 1 où l'on met en oeuvre quatre adsorbeurs avec un cycle d'une période T décomposée en quatre phases de durée $S_1$, $S_2$, $S_3$, $S_4$, égales à T/4, l'adsorbeur n° 1 est soumis aux opérations successives suivantes:

- production isobare à co-courant à pression P en deux étapes de durée respectivement $S_1$ et $S_2$ avec alimentation de gaz à traiter et soutirage de gaz produit selon $f_{p1}$, $f_{p2}$ et avec dérivation d'une part d'un courant partiel $f_{d1}$ dirigé vers l'adsorbeur N° 2 pour assurer partiellement sa recompression finale et d'autre part d'un courant partiel $f_{d2}$ dirigé vers l'adsorbeur N° 3 pour assurer partiellement sa recompression finale. L'opération de production du cycle élémentaire s'effectuant en deux étapes, la production sur l'installation à quatre adsorbeurs mettant en oeuvre ce cycle, est assurée simultanément en continu sur deux adsorbeurs.

- équilibrage en une seule étape de durée $S_{3.1}$ entre l'adsorbeur N° 1 et l'adsorbeur N° 4 par décompression partielle $f_e$ à co-courant de l'adsorbeur N° 1 et recompression partielle $f'_e$ à contre-courant de l'adsorbeur N° 4. La pression de l'adsorbeur N° 1 chute de la pression P à $p_1$ tandis que la pression de l'adsorbeur N° 4 sélève de la pression minimale p à $p_1$.

- vidage partiel à co-courant selon $f_R$ de durée $S_{3.2}$ de l'adsorbeur N° 1 vers le réservoir R, qui voit sa pression s'accroître depuis la pression minimale $p_R$ à la pression maximale $P_R$, la pression de l'adsorbeur N° 1 chûtant de la première pression intermédiaire $p_1$ à la seconde pression intermédiaire $p_2$ ;

- décompression finale, par exemple une mise à l'air, à contre-courant selon $f_a$ de durée $S_{3.3}$, la pression de l'adsorbeur N° 1 chûtant de la seconde pression intermédiaire $p_2$ à la pression minimale p du cycle ;

  - balayage ou élution à contre-courant selon $f_b$, de durée $S_{3.4}$ avec du gaz prélevé du réservoir R ;

  - recompression partielle à contre-courant par équilibrage avec l'adsorbeur N° 2 selon $f'_e$ de durée $S_{4.1}$ depuis la pression minimale p jusqu'à la première pression intermédiaire du cycle $p_1$ ;

  - recompression finale à contre-courant selon $f'_{d1}$ et $f'_{d2}$ de durée $S_{4.2}$ depuis la pression $p_1$ jusqu'à la pression maximale P du cycle, par prélèvements simultanés sur le courant de production en sortie des adsorbeurs N° 3 et N° 4.

Le cycle recommence pour l'adsorbeur N° 1 de la façon décrite ci-dessus et les trois autres adsorbeurs N° 2, N° 3, N° 4 suivent exactement les mêmes opérations avec un décalage de T/4, tandis que la pression dans le réservoir R passe alternativement de la pression $p_R$ à la pression $P_R$. Ainsi, pendant la durée $S_{3.2}$, le réservoir R reçoit le gaz issu de l'adsorbeur N° 1 selon $f_R$, et la pression du réservoir atteint $P_R$. Enfin, pendant la durée $S_{3.4}$ le gaz stocké dans R est prélevé pour effectuer l'élution de l'adsorbeur N° 1 selon $f_b$ et la pression du réservoir R redescend.

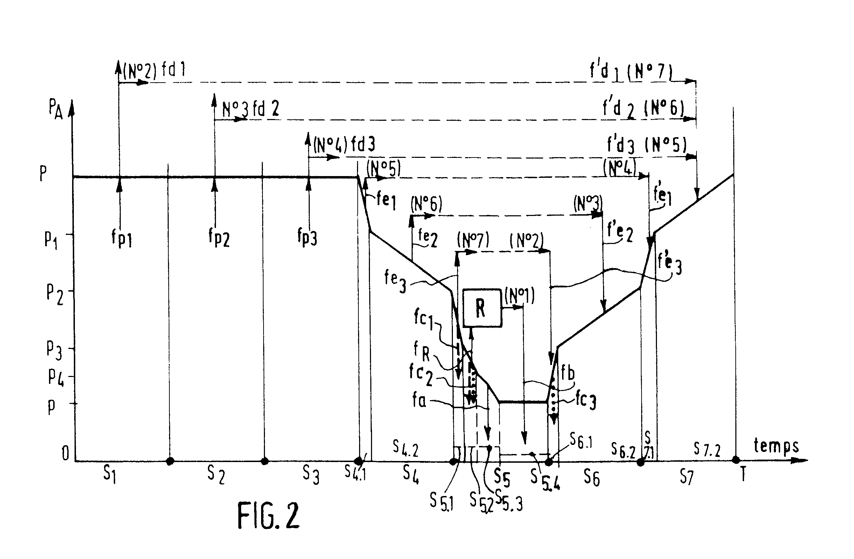

En se référant à la figure 2, une installation comporte ici sept adsorbeurs avec une durée de production isobare qui s'étend sur trois phases, soit une production simultanée sur trois adsorbeurs. Ici, il y a trois décompressions à co-courant par équilibrage, dont les deux premières sont réalisées selon $f_{e1}$ et selon $f_{e2}$ pendant les durées $S_{4.1}$ et $S_{4.2}$ de la phase $S_4$, alors que la phase $S_5$ incorpore la troisième décompression par équilibrage selon $f_{e3}$ pendant la durée $S_{5.1}$, le vidage partiel $f_R$ pendant la durée $S_{5.2}$, la décompression, finale $f_a$ pendant la durée $S_{5.3}$, le balayage $f_b$ à la pression minimale de cycle p pendant la durée $S_{5.4}$, le gaz de balayage issu du réservoir R provenant du vidage partiel de l'adsorbeur N° 1 pendant la sous-étape $S_{5.2}$.

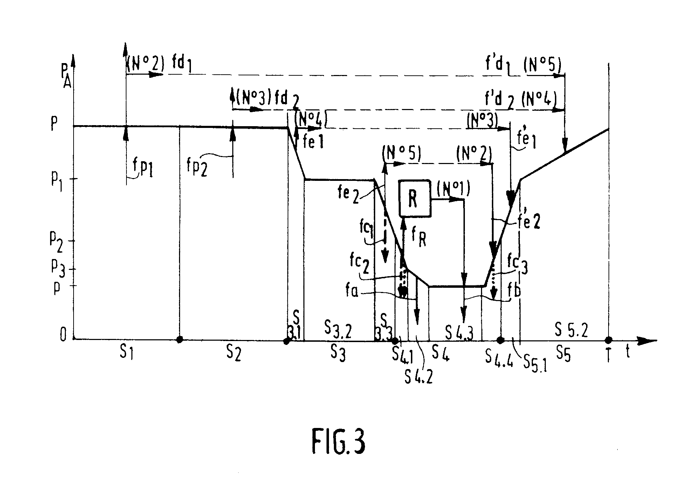

En se référant à la figure 3, l'installation comporte ici cinq adsorbeurs dont deux sont en production isobare simultanément. Ici, la première décompression par équilibrage $f_{e1}$, effectuée en $S_{3.1}$, est suivie en $S_{3.2}$ d'une mise en isolement de l'adsorbeur N° 1 (ni entrée ni sortie de gaz dans cet adsorbeur), elle-même suivie d'une étape en $S_{3.3}$ pendant laquelle s'effectue la seconde décompression par équilibrage selon $f_{e2}$.

Les étapes de vidage partiel $f_R$, de mise à l'atmosphère $f_a$, de balayage $f_b$ et de première recompression par équilibrage $f'_{e2}$ sont effectuées pendant la phase $S_4$, respectivement en $S_{4.1}$, $S_{4.2}$, $S_{4.3}$ et $S_{4.4}$. La seconde recompression par équilibrage $f'_{e1}$ et la recompression finale $f'_{d1}$ et $f'_{d2}$ sont effectuées pendant la phase $S_5$ respectivement en $S_{5.1}$ et $S_{5.2}$.

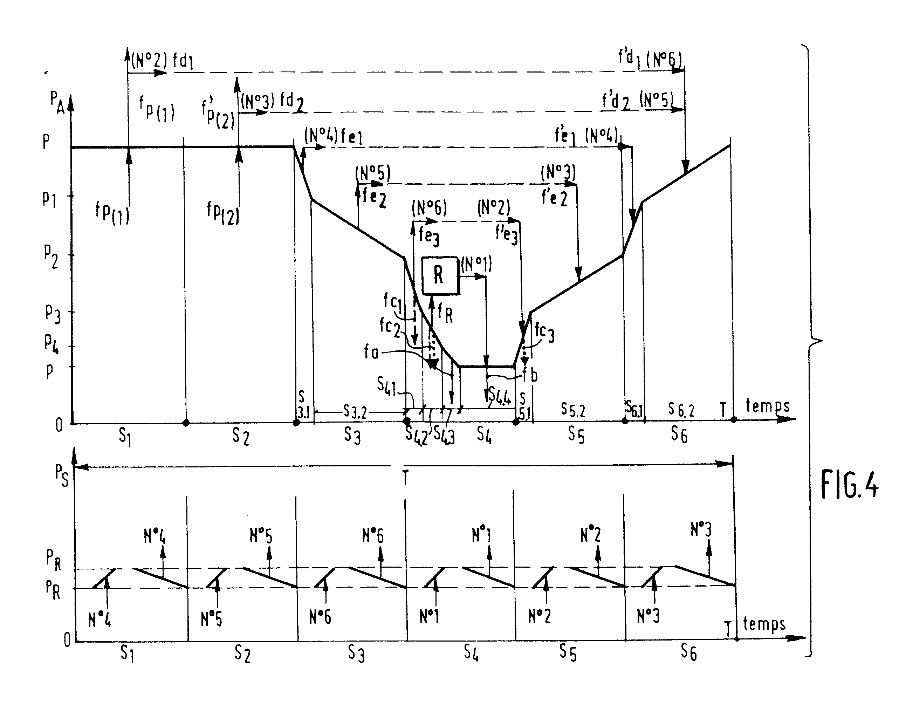

En se référant à la figure 4, une installation comporte ici six adsorbeurs dont deux en production isobare avec trois décompressions successives par équilibrage, dont deux, $f_{e1}$ et $f_{e2}$ sont effectuées pendant la phase $S_3$, tandis que la phase $S_4$ incorpore, la troisième décompression par équilibrage $f_{e3}$, le vidage partiel $f_R$ dans le réservoir R, la décompression finale $f_a$ et le balayage $f_b$ avec du gaz provenant du vidage partiel précédent de l'adsorbeur N° 1 dans le réservoir R.

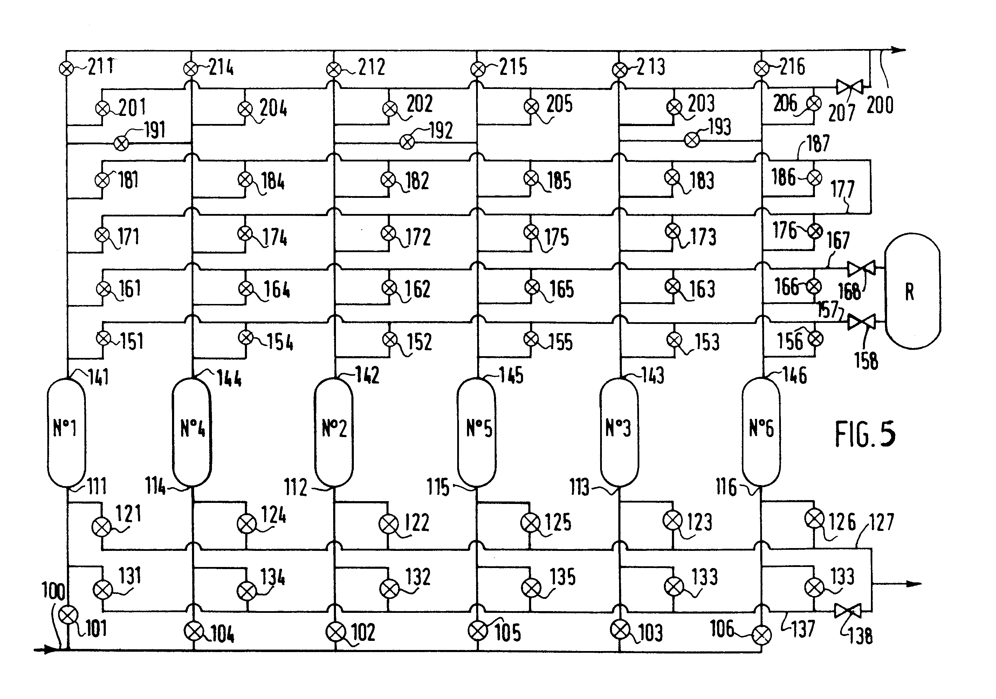

On a représenté à la figure 5 un schéma d'une installation mettant en oeuvre le cycle représenté à la figure 4 avec six adsorbeurs N° 1, 2, 3, 4, 5, 6, chacun des adsorbeurs étant alimenté en gaz traité par une conduite 100 raccordée par une électrovanne 101, 102, 103, 104, 105, 106 à une extrémité d'entrée d'alimentation 111, 112, 113, 114, 115 et 116, qui, elle-même, est raccordée par des vannes 121, 122, 123, 124, 125 et 126 à une conduite de mise à l'air directe 127 d'une part et par des vannes 131, 132, 133, 134, 135, 136 à une conduite de mise à l'air 137 incorporant une vanne de régulation 138. La sortie de production 141, 142, 143, 144, 145, 146 des adsorbeurs est raccordée :

- d'une part par des électrovannes 151, 152, 153, 154, 155, 156 à une conduite 157 à vanne de régulation 158 aboutissant au réservoir R ;
- d'autre part par des électrovannes 161, 162, 163, 164, 165, 166 à une conduite 167 à vanne de régulation 168 aboutissant également au réservoir R ;
- par des électrovannes 171, 172, 173, 174, 175, 176 à la conduite 177, elle-même raccordée à une conduite 187 raccordée par des électrovannes 181, 182, 183, 184, 185, 186 aux extrémités de sortie 141 à 146.

L'extrémité de sortie 141 est raccordée à l'extrémité de sortie 144 par une électrovanne 191 ; l'extrémité de sortie 142 est raccordée à l'extrémité de sortie 145 par une électrovanne 192 ; l'extrémité de sortie 143 est raccordée à l'extrémité de sortie 146 par une électrovanne 193. Une conduite de production 200 est raccordée via une vanne de régulation 207 respectivement par des électrovannes 201, 202, 203, 204, 205, 206 aux sorties 141, 142, 143, 144, 145, 146 d'une part et d'autre part par l'intermédiaire d'électrovannes 211, 212, 213, 214, 215, 216 directement aux sorties 141, 142, 143, 144, 145 et 146.

On constate aisément qu'une telle installation est susceptible de mettre en oeuvre les différents cycles opératoires et l'on signale à titre d'exemple en se référant aux notations utilisées figure 4: les différentes opérations sur chacun des adsorbeurs N° 1 à 6 pendant une première fraction de temps de durée T/6 correspondant à la durée d'une phase.

a) l'adsorbeur N° 1 est en phase $S_1$ de première étape de production selon $f_{p1}$ assurée par l'ouverture des vannes 101 et 211 ;

b) l'adsorbeur N° 2 est en phase $S_6$ et subit successivement les étapes correspondant à $S_{6.1}$ et $S_{6.2}$. L'étape $S_{6.1}$ qui réalise la recompression de l'adsorbeur N° 2 selon $f'_{e1}$, par le premier équilibrage $f_{e1}$ - $f'_{e1}$ entre les adsorbeurs N° 5 et N° 2 est assurée par l'ouverture de la vanne 192. L'étape $S_{6.2}$ qui réalise la recompression finale ($f'_{d1}$) et ($f'_{d2}$) est assurée par l'ouverture de la vanne 202 à travers la vanne de régulation 207. Le gaz est prélevé sur la ligne de production 200 alimentée par l'adsorbeur N° 1 en phase de première production comme signalé en a) et par l'adsorbeur N° 6 en phase de deuxième production comme il sera signalé en f) ;

c) l'adsorbeur N° 3 est en phase $S_5$ et subit successivement les deux étapes correspondant à $S_{5.1}$ et $S_{5.2}$. L'étape $S_{5.1}$ qui réalise la recompression de l'adsorbeur N° 3 selon $f'_{e3}$ par le troisième équilibrage $f_{e3}$ - $f'_{e3}$ entre les adsorbeurs N° 4 et N° 3 est assurée par l'ouverture des vannes 184 et 173. L'étape $S_{5.2}$ qui réalise la recompression de l'adsorbeur N° 3 selon $f'_{e2}$ par le second équilibrage $f_{e2}$ - $f'_{e2}$ entre les adsorbeurs N° 5 et N° 3 est assurée par l'ouverture des vannes 185 et 173 ;

d) l'adsorbeur N° 4 est en phase $S_4$ et subit successivement les quatre étapes correspondant à $S_{4.1}$, $S_{4.2}$, $S_{4.3}$, $S_{4.4}$. L'étape $S_{4.1}$ qui réalise la décompression de l'adsorbeur N° 4 selon $f_{e3}$ par le troisième équilibrage $f_{e3}$ - $f'_{e3}$ entre les adsorbeurs N° 4 et N° 3, est assurée par l'ouverture des vannes 184 et 173 comme signalé en c). L'étape $s_{4.2}$ qui réalise la décompression $f_R$ avec stockage dans le réservoir R est réalisée par l'ouverture de la vanne 164 à travers la vanne de régulation 168. L'étape $S_{4.3}$ qui réalise la décompression finale $f_a$ est assurée par l'ouverture de la vanne 134 à travers la vanne de régulation 138. L'étape $S_{4.4}$ qui réalise l'élution $f_b$ de l'adsorbeur à partir du gaz stocké dans le réservoir R est assurée par l'ouverture des vannes 154 et 124 à travers la vanne de régulation 158 ;

e) l'adsorbeur N°5 est en phase $S_3$ et subit successivement les deux étapes correspondant à $S_{3.1}$ et $S_{3.2}$. L'étape $S_{3.1}$ qui réalise la décompression de l'adsorbeur N°5 selon $f_{e1}$ par le premier équilibrage $f_{e1}$ - $f'_{e1}$ entre les adsorbeurs N°5 et N°2 est assurée par l'ouverture de la vanne 192 comme indiqué en b). L'étape $S_{3.2}$, qui réalise la décompression de l'adsorbeur N°5 selon $f_{e2}$ par le second équilibrage $f_{e2}$ - $f'_{e2}$ entre les adsorbeurs N°5 et N°2 est assurée par ouverture des vannes 185 et 173 comme indiqué en c) ;

f) l'adsorbeur N° 6 est en phase $S_2$ et subit la deuxième étape de production $f_{p2}$ assurée par ouverture des vannes 106 et 216.

Au cours du déroulement du temps par fractions successives de durée T/6, les mêmes étapes sont réalisées sur chacun des adsorbeurs avec décalage du numéro des adsorbeurs affectés par les opérations. Ainsi, pour la deuxième fraction de temps de durée T/6 les opérations décrites en a), b) c) d), e), f) sont réalisées respectivement sur les adsorbeurs N° 2, N° 3, N° 4, N° 5, N° 6 et N° 1 et ainsi de suite, avec ouverture des vannes correspondant aux opérations effectuées.

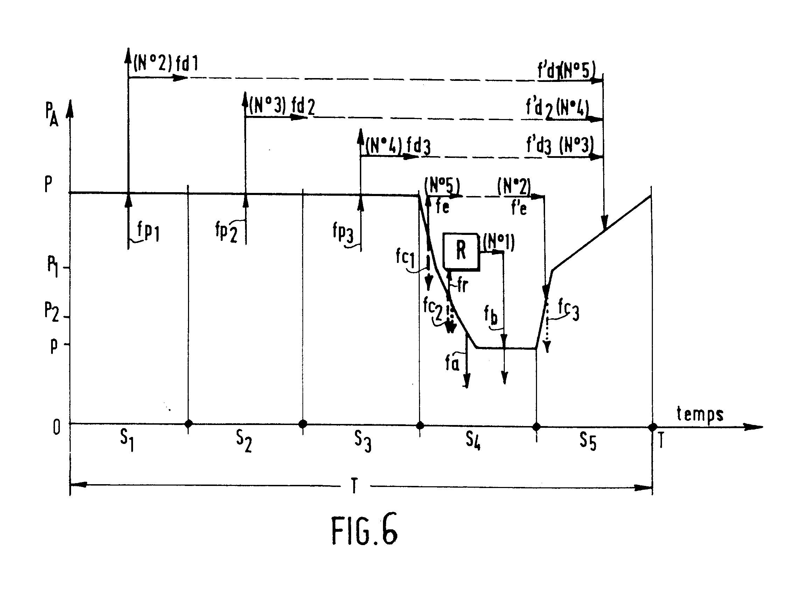

Selon la figure 6, un cycle met en oeuvre cinq adsorbeurs dont trois sont simultanément en production isobare. Un adsorbeur est donc en production pendant les phases $S_1(f_{p1})$ $S_2(f_{p2})$ $S_3(f_{p3})$, en décompression ($f_e$, $f_R$, $f_a$) et le balayage ($f_b$) pendant la phase $S_4$, puis en recompression ($f'_e$, $f'_{d3}$, $f'_{d2}$, $f'_{d1}$) pendant la phase $S_5$.

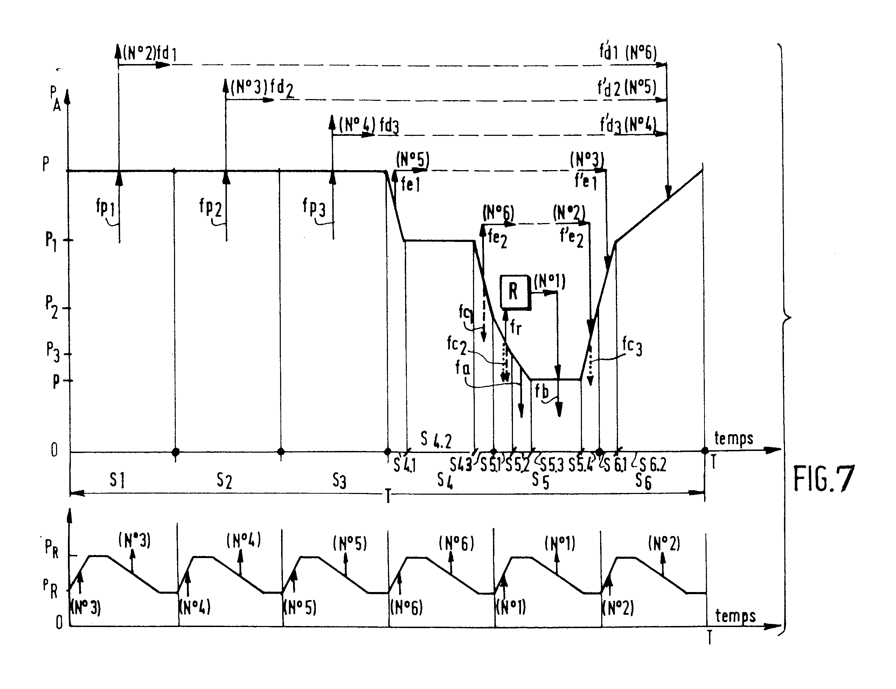

Selon la figure 7, un cycle met en oeuvre 6 adsorbeurs subissant cycliquement 3 étapes de production isobare pendant les phases $S_1$, $S_2$, $S_3$.

- deux décompressions par équilibrage ($f_{e1}$) et ($f_{e2}$) séparées par un palier de pression pendant la phase $S_4$
- une décompression finale ($f_a$), un balayage ($f_b$) et un premier équilibrage de recompression ($f'_{e2}$) pendant la phase $S_5$
- une recompression (équilibrage $f'_{e1}$ et dérivation de production $f'_{d3}$, $f'_{d2}$, $f'_{d1}$), pendant la phase $S_6$.

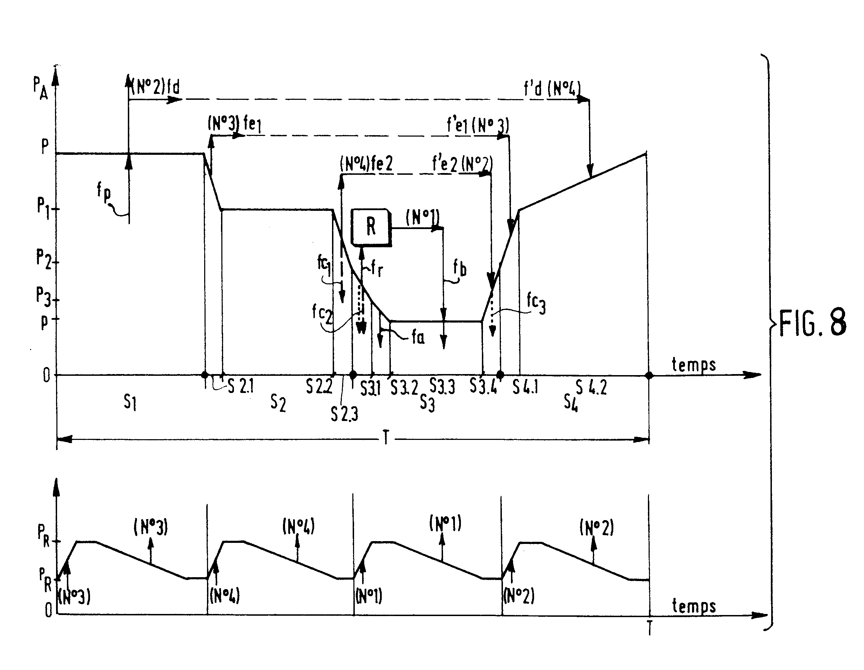

Selon la figure 8, on met en oeuvre quatre adsorbeurs avec un seul adsorbeur en production isobare et deux équilibrages. La durée cumulée des opérations successives $f_{e2}$, $f_R$, $f_a$ et $f_b$ est égale à la durée d'une phase.

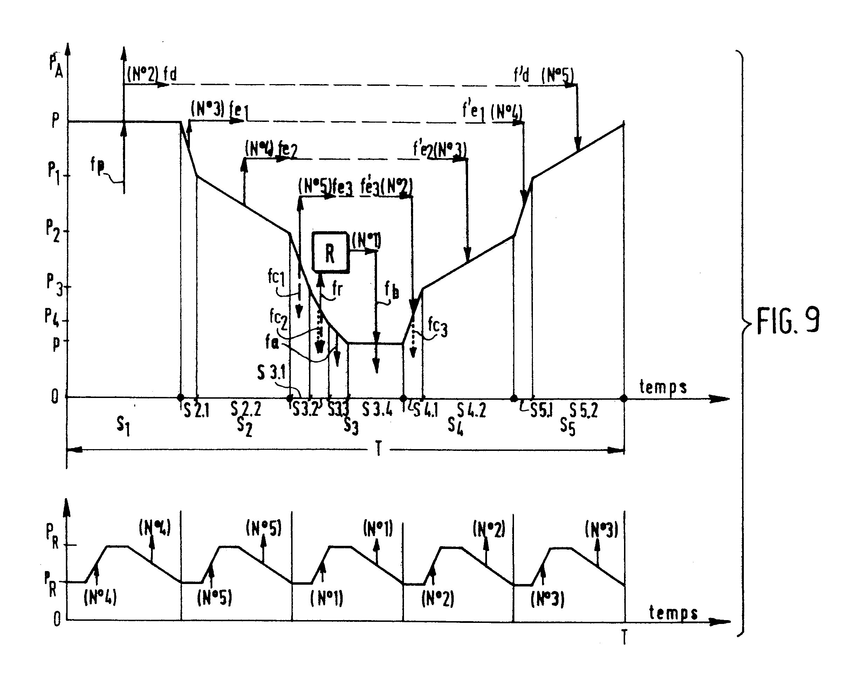

Selon la figure 9, on met en oeuvre cinq adsorbeurs avec un seul adsorbeur en production isobare et trois équilibrages. La durée cumulée des opérations successives $f_{e3}$, $f_R$, $f_a$ et $f_b$ est égale à la durée d'une phase.

Dans toutes les mises en oeuvre décrites ci-dessus, on dispose de gaz résiduaire, c'est-à-dire extrait des adsorbeurs à contre-courant, pendant les étapes de décompression finale $f_a$ et de balayage $f_b$. La durée cumulée des étapes $f_a$ et $f_b$ est inférieure à la durée d'une phase ; le soutirage des résiduaires est alors discontinu. Or, il peut être intéressant de disposer pour chacun des cycles décrits précédemment, d'un soutirage continu et à débit aussi constant que possible. Pour atteindre cet objectif, il est souhaitable d'obtenir un soutirage à contre-courant pendant une durée équivalente à la durée d'une phase complète, c'est-à-dire, pour les mises en oeuvre décrites, de réaliser deux soutirages supplémentaires à contre-courant.

On propose deux variantes de réalisation de ces deux soutirages supplémentaires :

- Variante A : les deux soutirages supplémentaires effectués à contre-courant sont réalisés sur les deux étapes immédiatement en amont des étapes $f_a$ et $f_b$, c'est-à-dire l'une, représentée par $f_{c2}$ au cours de l'étape de vidage partiel $f_R$ vers le réservoir R, et l'autre, représentée par $f_{c1}$ au cours de la décompression $f_e$ correspondant au dernier équilibrage.

- Variante B : les deux soutirages supplémentaires effectués à contre-courant sont réalisés, l'un, sur l'étape immédiatement en amont de l'étape $f_a$, c'est-à-dire sur l'étape $f_R$ et selon $f_{c2}$ comme ci-dessus, et l'autre, représentée par $f_{c3}$ sur l'étape immédiatement en aval de l'étape $f_b$, c'est-à-dire sur la première recompression $f'_e$ correspondant au dernier équilibrage.

En se référant aux mises en oeuvre décrites ci-dessus, par les figures 1 à 4 et 6 à 9, sur lesquelles les opérations $f_{c1}$ et $f_{c2}$ de la variante A ont été représentées en traits discontinus, et les opérations $f_{c2}$ et $f_{c3}$ de la variante B, en pointillé, on obtient les cycles modifiés suivants :

Figure 1 :

- Variante A :

    $f_{c1}$ pendant $f_e$
    $f_{c2}$ pendant $f_R$

- Variante B :

    $f_{c2}$ pendant $f_R$
    $f_{c3}$ pendant $f'_e$

Figure 2 :

- Variante A :

    $f_{c1}$ pendant $f_{e3}$
    $f_{c2}$ pendant $f_R$

- Variante B :

    $f_{c2}$ pendant $f_R$
    $f_{c3}$ pendant $f'_{e3}$

Figure 3 :

- Variante A :

$f_{c1}$ pendant $f_{e2}$
$f_{c2}$ pendant $f_R$

- Variante B :

$f_{c2}$ pendant $f_R$
$f_{c3}$ pendant $f'_{e2}$

Figure 4 :

- Variante A :

$f_{c1}$ pendant $f_{e3}$
$f_{c2}$ pendant $f_R$

- Variante B :

$f_{c2}$ pendant $f_R$
$f_{c3}$ pendant $f'_{e3}$

Figure 6 :

- Variante A :

$f_{c1}$ pendant $f_e$
$f_{c2}$ pendant $f_R$

- Variante B :

$f_{c2}$ pendant $f_R$
$f_{c3}$ pendant $f'_e$

Figure 7 :

- Variante A :

$f_{c1}$ pendant $f_{e2}$
$f_{c2}$ pendant $f_R$

- Variante B :

$f_{c2}$ pendant $f_R$
$f_{c3}$ pendant $f'_{e2}$

Figure 8 :

- Variante A :

$f_{c1}$ pendant $f_{e2}$
$f_{c2}$ pendant $f_R$

- Variante B :

$f_{c2}$ pendant $f_R$
$f_{c3}$ pendant $f'_{e2}$

Figure 9 :

- Variante A :

$f_{c1}$ pendant $f_{e3}$
$f_{c2}$ pendant $f_R$

- Variante B :

$f_{c2}$ pendant $f_R$
$f_{c3}$ pendant $f'_{e3}$

**Revendications**

1. Procédé de séparation d'un mélange gazeux par adsorption, du genre où l'on effectue sur chacun d'au moins quatre adsorbeurs un cycle d'opérations successives suivantes, les cycles étant décalés d'un adsorbeur par rapport au suivant d'un déphasage égal à la durée d'un cycle divisée par le nombre d'adsorbeurs :

a) une opération de production isobare à la pression haute du cycle, dite à co-courant ;

b) une première décompression à co-courant par au moins un équilibrage entre ledit adsorbeur en décompression et au moins un autre adsorbeur en recompression à contre-courant, chaque équilibrage étant un équilibrage "direct" assurant le transfert du gaz provenant d'un adsorbeur en décompression directement et immédiatement dans un adsorbeur en recompression ;

c) une seconde décompression par vidage partiel à co-courant vers un réservoir de stockage ;

d) immédiatement après l'étape (c), une troisième décompression, qui est finale, à contre-courant jusqu'à la pression basse du cycle ;

e) un balayage à contre-courant à ladite pression basse par du gaz issu du réservoir de stockage, et cela pendant une durée supérieure à celle de l'étape (c) ;

f) une première recompression à contre-courant par au moins un équilibrage du type selon (b) ;

g) immédiatement suivie par une recompression finale à contre-courant jusqu'à la pression haute du cycle par un débit de gaz prélevé sur le débit de production ; caractérisé par la combinaison des mesures suivantes :

h) la somme des durées du vidage selon c), de la décompression finale selon d), et du balayage selon e) est inférieure audit déphasage ;

i) le nombre total d'adsorbeurs est inférieur ou égal à $1 + x + y$, $x$ étant le nombre d'adsorbeurs simultanément en production isobare et $y$ le nombre d'équilibrages directs ;

l) pendant la phase (c), le réservoir de stockage est exclusivement raccordé à l'adsorbeur en cours de vidage, et pendant la phase (e) ledit réservoir de stockage est exclusivement raccordé à l'adsorbeur en cours de balayage;

m) une opération de vidage-décompression par vidage partiel selon (c), qui intéresse un adsorbeur, est suivie, après la phase (d), d'une opération de balayage selon (e) qui intéresse exclusivement le même adsorbeur.

2. Procédé de séparation selon la revendication 1, caractérisé, en ce qu'il y a deux adsorbeurs simultanément en production isobare, le nombre d'adsorbeurs étant de quatre à six, tandis que le nombre d'équilibrages est d'un pour un nombre total d'adsorbeurs égal à quatre, de deux pour un nombre total d'adsorbeurs égal à cinq, de trois pour un nombre total d'adsorbeurs égal à six.

3. Procédé de séparation selon la revendication 1, caractérisé en ce qu'il y a trois adsorbeurs en production isobare simultanément, caractérisé en ce que le nombre d'équilibrages est de un pour un nombre total d'adsorbeurs égal à cinq, de deux pour un nombre total d'adsorbeurs égal à six et de trois pour un nombre total d'adsorbeurs égal à sept.

4. Procédé selon la revendication 1, caractérisé en ce qu'il y a seulement un adsorbeur en production isobare, le nombre d'adsorbeurs étant de quatre ou cinq, tandis que le nombre d'équilibrages est de deux pour un nombre total d'adsorbeurs égal à quatre, de trois pour un nombre total d'adsorbeurs égal à cinq.

5. Procédé selon la revendication 1, caractérisé en ce qu'on effectue simultanément au vidage partiel à co-courant vers le réservoir selon c) un soutirage de gaz à contre-courant.

6. Procédé selon la revendication 1, caractérisé en ce qu'on effectue simultanément à la décompression à co-courant au cours de l'équilibrage selon b), qui précède immédiatement le vidage partiel selon c), un soutirage de gaz à contre-courant.

7. Procédé selon la revendication 1, caractérisé en ce qu'on effectue simultanément à la recompression partielle à contre-courant au cours de l'équilibrage selon f), qui suit immédiatement le balayage selon e), un soutirage de gaz à contre-courant.

8. Procédé selon la revendication 1 caractérisé en ce qu'il comporte les étapes du procédé selon les revendications 5 et 6.

9. Procédé selon la revendication 1 caractérisé en ce qu'il comporte les étapes de procédé selon les revendications 5 et 7.

10. Procédé selon l'une des revendication 1 à 9, caractérisé en ce qu'on effectue la recompression partielle à contre-courant au cours de l'équilibrage selon f), qui précède immédiatement la recompression finale selon g), simultanément par du gaz issu de la mise en équilibrage entre deux adsorbeurs et par du gaz prélevé sur la production.

11. Procédé selon l'une des revendications 1 à 10, caractérisé en ce qu'on effectue le balayage à contre-courant selon e) simultanément par du gaz issu du réservoir de stockage et par du gaz prélevé sur la production.

12. Procédé selon l'une des revendications 5 à 11, caractérisé en ce que la pression basse est la pression atmosphérique, et en ce que l'évacuation des soutirages à contre-courant est effectuée à l'air libre.

13. Procédé selon l'une des revendications 5 à 12, caractérisé en ce que l'évacuation des soutirages à contre courant est effectuée dans un collecteur de gaz résiduaire, dont la pression est généralement différente de la pression atmosphérique et en ce que la pression basse du cycle est la pression du collecteur de gaz résiduaire.

14. Application du procédé selon l'une des revendications 1 à 13, caractérisée en ce qu'elle est utilisée pour la purification d'hydrogène contenant un ou plusieurs constituants indésirables, en particulier $N_2$, $O_2$, A, CO, $CO_2$, hydrocarbures, autres impuretés.

15. Application du procédé selon l'une des revendications 1 à 13, caractérisée en ce qu'elle est utilisée pour le traitement de gaz naturel.

16. Application du procédé selon l'une des revendications 1 à 13, caractérisée en ce qu'elle est utilisée pour l'élimination des impuretés contenues dans l'hélium.

17. Application du procédé selon l'une des revendications 1 à 13, caractérisée en ce qu'elle est utilisée pour l'enrichissement en oxygène, ou la séparation de l'oxygène de l'air.

**Claims**

1. Adsorption process for separating a gaseous mixture, of the kind where a cycle of successive operations as follows is carried out on each of at least four adsorbers, the cycles being advanced from one adsorber in relation to the following one with a phase shift equal to the duration of a cycle divided by the number of adsorbers:

   a) an isobaric production operation at the top pressure of the cycle, in so-called co-current;

b) a first co-current decompression by means of at least one equilibration between said adsorber in decompression and at least one other adsorber in recompression in counter-current, each equilibration being a "direct" equilibration ensuring the transfer of the gas coming from one adsorber in decompression directly and immediately into an adsorber in recompression;

c) a second decompression by partial evacuation in co-current towards a storage reservoir;

d) immediately after stage (c), a third decompression, which is final, in counter-current up to the base pressure of the cycle;

e) scavenging in counter-current at said base pressure by the gas derived from the storage reservoir, this taking place for a duration which is greater than that of stage (c);

f) a first recompression in counter-current by means of at least one equilibration of the type according to (b);

g) immediately followed by a final recompression in counter-current until at the top pressure of the cycle by an output of gas taken from the production output; characterised by the combination of the following measures:

h) the sum of the durations of the evacuation according to c), of the final decompression according to d), and of the scavenging according to e) is less than said phase shift;

i) the total number of adsorbers is less than or equal to $1 + x + y$, $x$ being the number of adsorbers simultaneously in isobaric production and $y$ being the number of direct equilibrations;

l) during phase (c), the storage reservoir is exclusively connected to the adsorber during the course of being evacuated and during phase (e) said storage reservoir is exclusively connected to the adsorber during the course of being scavenged;

m) an operation of evacuation-decompression by partial evacuation according to (c), which affects one adsorber, is followed, after phase (d), by a scavenging operation according to (e) which affects exclusively the same adsorber.

2. Separating process according to claim 1, characterised in that there are two adsorbers simultaneously in isobaric production, the number of adsorbers being four to six, whilst the number of equilibrations is one for a total number of adsorbers equal to four, two for a total number of adsorbers equal to five, three for a total number of adsorbers equal to six.

3. Separating process according to claim 1, characterised in that there are three adsorbers simultaneously in isobaric production, characterised in that the number of equilibrations is one for a total number of adsorbers equal to five, two for a total number of adsorbers equal to six and three for a total number of adsorbers equal to seven.

4. Process according to claim 1, characterised in that there is only one adsorber in isobaric production, the number of adsorbers being four or five, whilst the number of equilibrations is two for a total number of adsorbers equal to four, three for a total number of adsorbers equal to five.

5. Process according to claim 1, characterised in that at the same time as the partial evacuation in co-current towards the reservoir according to c) gas is drawn off in counter-current.

6. Process according to claim 1, characterised in that at the same time as the decompression in co-current during the course of the equilibration according to b), which immediately precedes the partial evacuation according to c), gas is drawn off in counter-current.

7. Process according to claim 1, characterised in that at the same time as the partial recompression in counter-current during the course of the equilibration according to f), which immediately follows the scavenging according to e), gas is drawn off in counter-current.

8. Process according to claim 1, characterised in that it comprises the stages of the process according to claims 5 and 6.

9. Process according to claim 1, characterised in that it comprises the stages of the process according to claims 5 and 7.

10. Process according to one of the claims 1 to 9, characterised in that the partial recompression in counter-current in the course of the equilibration according to f), which immediately precedes the final recompression according to g), is effected simultaneously by the gas derived from the equilibration between two adsorbers and by the gas taken from the production.

11. Process according to one of the claims 1 to 10, characterised in that the scavenging in counter-current according to e) is effected simultaneously by the gas derived from the storage reservoir and by the gas taken from the production.

12. Process according to one of the claims 5 to 11, characterised in that the base pressure is the atmospheric pressure and in that the evacuation of those quantities which are drawn off in counter-current is effected into the open air.

13. Process according to one of the claims 5 to 12, characterised in that the evacuation of those quantities which are drawn off in counter-current is effected in a collector of residual gas, the pressure of which is generally different from the atmospheric pressure and in that the base pressure of the cycle is the pressure of the collector of residual gas.

14. Application of the process according to one of the claims 1 to 13, characterised in that it is used for the purification of hydrogen containing one or several undesirable constituents, in particular $N_2$, $O_2$, A, CO, $CO_2$, hydrocarbons, other impurities.

15. Application of the process according to one of the claims 1 to 13, characterised in that it is used for the treatment of natural gas.

16. Application of the process according to one of the claims 1 to 13, characterised in that it is used for the elimination of the impurities contained in helium.

17. Application of the process according to one of the claims 1 to 13, characterised in that it is used for oxygen enrichment, or the separation of oxygen from the air.

**Patentansprüche**

1. Verfahren zum Trennen eines Gasgemisches durch Adsorption, bei dem man auf jeden von mindestens vier Adsorbern einen Zyklus von ununterbrochenen, folgenden Tätigkeiten einwirken läßt, wobei die Zyklen eines Adsorbers bezüglich dem folgenden um eine Phasenverschiebung verschoben sind, die gleich der Dauer eines Zyklus, geteilt durch die Anzahl der Adsorber ist:

a) eine isobare Produktionstätigkeit bei hohem Druck des Zyklus, im Gleichstrom genannt;

b) eine erste Druckverminderung im Gleichstrom durch mindestens eine Gleichgewichtseinstellung zwischen dem Adsorber unter Druckverminderung und mindestens einem anderen Adsorber unter Nachverdichten im Gegenstrom, wobei jede Gleichgewichtseinstellung eine "direkte" Gleichgewichtseinstellung ist, welche die Überleitung des Gases, das aus einem Adsorber unter Druckverminderung stammt, direkt und unmittelbar in einen Adsorber unter Nachverdichten sicherstellt;

c) eine zweite Druckverminderung durch Teilentleerung im Gleichstrom zu einem Speicherbehälter hin;

d) unmittelbar nach dem Schritt c) eine dritte Druckverminderung, die abschließend ist, im Gegenstrom bis auf den Niederdruck des Zyklus;

e) ein Spülen im Gegenstrom bei dem niedrigen Druckdurch Gas, das aus dem Speicherbehälter stammt, und dies während einer Dauer, die größer ist als die des Schrittes c);

f) eine erste Nachverdichtung im Gegenstrom durch mindestens eine Gleichgewichtseinstellung vom Typ gemäß b);

g) unmittelbar gefolgt von einer abschließenden Nachverdichtung im Gegenstrom bis auf den hohen Druck des Zyklus durch einen Gasdurchsatz, der vom Produktionsdurchsatz entnommen ist;

gekennzeichnet durch die Kombination folgender Maßnahmen:

h) die Summe der Dauer der Entleerung nach c), der abschließenden Druckverminderung nach d) und des Spülens nach e) ist kleiner als die Phasenverschiebung;

i) die Gesamtzahl der Adsorber ist kleiner oder gleich 1 + x + y, wobei x die Zahl der Adsorber ist, die gleichzeitig in isobarer Produktions sind, und y die Zahl der direkten Gleichgewichtseinstellungen ist;

l) während der Phase c) ist der Speicherbehälter ausschließlich mit dem Adsorber im Verlaufe des Entleerens verbunden, und während der Phase e) ist der Speicherbehälter ausschließlich mit dem, Adsorber im Verlaufe des Spülens verbunden;

m) eine Entleerungs-Druckverminderungstätigkeit durch teilweise Entleerung gemäß c), die einen Adsorber angeht, wird nach der Phase d) von einer Spültätigkeit gemäß e) gefolgt, die ausschließlich denselben Adsorber angeht.

2. Trennverfahren nach Anspruch 1, dadurch gekennzeichnet, daß es zwei Adsorber gleichzeitig in isobarer Produktion gibt, wobei die Zähl der Adsorber von vier bis sechs ist, während die Zähl der Gleichgewichtseinstellungen eins ist für eine Gesamtzahl von Adsorbern gleich vier, zwei ist für eine Gesamtzahl von Adsorbern gleich fünf und drei ist für eine Gesamtzahl von Adsorbern gleich sechs.

3. Trennverfahren nach Anspruch 1, dadurch gekennzeichnet, daß es drei Adsorber gleichzeitig in isobarer Produktion gibt, dadurch gekennzeichnet, daß die Anzahl der Gleichgewichtseinstellungen eins ist für eine Gesamtzahl von Adsorbern gleich fünf, zwei ist für eine Gesamtzahl von Adsorbern gleich sechs und drei ist für eine Gesamtzahl von Adsorbern gleich sieben.

4. Verfahren nach Anspruch 1, dadurch gekennzeichnet, daß es nur einen Adsorber in isobarer Produktion gibt, wobei die Anzahl Adsorber gleich vier oder fünf ist, während die Anzahl von Gleichgewichtseinstellungen zwei ist für eine Gesamtzahl von Adsorbern gleich vier und drei ist für eine Gesamtzahl von Adsorbern gleich fünf.

5. Verfahren nach Anspruch 1, dadurch gekennzeichnet, daß man gleichzeitig zur Teilentleerung im Gleichstrom zum Behälter hin gemäß c) ein Abziehen von Gas im Gegenstrom durchführt.

6. Verfahren nach Anspruch 1, dadurch gekennzeichnet, daß man gleichzeitig zur Druckverminderung im Gleichstrom im Verlaufe der Gleichgewichtseinstellung gemäß b), welche unmittelbar der Teilentleerung gemäß c) vorangeht, ein Abziehen von Gas im Gegenstrom durchführt.

7. Verfahren nach Anspruch 1, dadurch gekennzeichnet, daß man gleichzeitig zur teilweisen Nachverdichtung im Gegenstrom im Verlaufe der Gleichgewichtseinstellung gemäß f), die unmittelbar dem Spülen gemäß e) folgt, ein Abziehen von Gas im Gegenstrom durchführt.

8. Verfahren nach Anspruch 1, dadurch gekennzeichnet, daß es die Verfahrensschritte nach den Ansprüchen 5 und 6 aufweist.

9. Verfahren nach Anspruch 1, dadurch gekennzeichnet, daß es die Verfahrensschritte gemäß den Ansprüchen 5 und 7 aufweist.

10. Verfahren nach einem der Ansprüche 1 bis 9, dadurch gekennzeichnet, daß man die teilweise Nachverdichtung im Gegenstrom im Verlaufe der Gleichgewichtseinstellung gemäß f), die unmittelbar der abschließenden Nachverdichtung gemäß g) vorangeht, gleichzeitig mit Gas ausführt, weiches aus dem in Gleichgewichtseinstellung Bringen zwischen zwei Adsorbern stammt, und mit Gas, welches von der Produktion entnommen ist.

11. Verfahren nach einem der Ansprüche 1 bis 10, dadurch gekennzeichnet, daß man das Spülen im Gegenstrom gemäß e) gleichzeitig mit Gas durchführt, welches von dem Speicherbehälter stammt, und mit Gas, welches von der Produktion entnommen ist.

12. Verfahren nach einem der Ansprüche 5 bis 11, dadurch gekennzeichnet, daß der Niederdruck der Atmosphärendruck ist und daß das Entleeren der Entnahmen im Gegenstrom im Freien durchgeführt ist.

13. Verfahren nach einem der Ansprüche 5 bis 12, dadurch gekennzeichnet, daß das Entleeren der Entnahmen im Gegenstrom in einem Restgaskollektor erfolgt, dessen Druck sich im allgemeinen von dem atmosphärischen Druck unterscheidet, und daß der Niederdruck des Zyklus der Druck des Restgaskollektors ist.

14. Anwendung des Verfahrens nach einem der Ansprüche 1 bis 13, dadurch gekennzeichnet, daß sie für die Reinigung von Wasserstoff verwendet wird, der eine oder mehrere unerwünschte Komponenten enthält, insbesondere $N_2$, $O_2$, A, CO, $CO_2$, Kohlenwasserstoffe und andere Verunreinigungen.

15. Anwendung des Verfahrens nach einem der Ansprüche 1 bis 13, dadurch gekennzeichnet, daß es für die Behandlung von Erdgas verwendet wird.

16. Anwendung des Verfahrens nach einem der Ansprüche 1 bis 13, dadurch gekennzeichnet, daß es für die Beseitigung von in Helium enthalten Verunreinigungen verwendet wird.

17. Anwendung des Verfahrens nach einem der Ansprüche 1 bis 13, dadurch gekennzeichnet, daß es für die Anreicherung an Sauerstoff oder die Trennung von Sauerstoff von Luft verwendet wird.

FIG. 1

FIG. 2

FIG.3

EP 0 248 720 B1

FIG.4

FIG.5

FIG.6

FIG.7

FIG. 8

EP 0 248 720 B1

FIG. 9

EP 0 248 720 B1